# EUROPÄISCHE PATENTANMELDUNG

(11) **EP 0 581 992 A1**
(43) Veröffentlichungstag der Anmeldung: **09.02.1994**
(21) Anmeldenummer: 92113485.4
(22) Anmeldetag: 07.08.1992
(51) Int. Cl.: C05F 17/00

(54) **Verfahren zum Humifizieren von strukturierten und unstrukturierten organischen Materialien**

(71) Anmelder: Rhodovi, Hans-Georg, 32108 Bad Salzuflen (DE)
(72) Erfinder: Rhodovi, Hans-Georg, 32108 Bad Salzuflen (DE)
(74) Vertreter: Koepe, Gerd L., Dipl.-Chem.

(57) **Zusammenfassung**

Die Erfindung betrifft ein Verfahren zum Humifizieren von strukturiertem und/oder unstrukturierten organischen Materialien durch Bereitstellung eines derartigen Materials oder einer gut durchmischten Mischung mehrerer derartiger Materialien unter Einstellung
- eines Makroporenraums von ≧ 300 ml Luft pro Liter organisches Ausgangsmaterial;
- eines Gehalts an Trockensubstanz von ≧ 45 %, bezogen auf das Gewicht des organischen Ausgangsmaterials;
- eines Gehalts an organischer Trockensubstanz ≧ 30 %, bezogen auf den Trockensubstanzgehalt;
- einer Saugkapazität von ≧ 150 ml pro Liter organischen Ausgangsmaterials; und
- eines pH-Wertes im Bereich von 6,5 bis 8,0,
und selbständiges aerobes Verrottenlassen der Materials oder der Mischung bis zu vollständigen Humifizierung des Materials.

## Beschreibung

Die Erfindung betrifft ein Verfahren zum Humifizieren von strukturierten und unstrukturierten organischen Materialien.

Bei der sogenannten "Verrottung" oder "Humifizierung" bauen aerobe Mikroorganismen feste organische Substanzen allmählich biologisch ab und wandeln diese in Humus um, also in eine stabile, im wesentlichen alle Nährstoffe für Pflanzen enthaltende und dadurch als Bodenverbesserer ("Dauerhumus") geeignete Masse. Es findet also im Anschluß an den biologischen Abbau ein Neuaufbau von Biomasse statt. Dieser erfolgt nur unter sich in der Natur in langer Zeit einstellenden Bedingungen.

Von der Humifizierung zu unterscheiden und als deren Vorstufe anzusehen ist die sogenannte "Kompostierung". Diese wird immer häufiger auch zur Durchführung durch den Laien empfohlen, um den Hausmüllanfall für das System der Müllentsorgung und -beseitigung zu verringern, und stellt an die Verfahrensführung wegen des ausschließlich erfolgenden biologischen Abbaus keine hohen Anforderungen. Das Produkt - Kompost - hat im Gegensatz zum geruchsneutralen Humus einen pilzigen bis erdigen Geruch, enthält jedoch meist noch pathogene Keime. Es ist vor einer vollständigen Humifizierung als ausgewogener Bodenverbesserer mit allen für das Pflanzenwachstum und das Mikroklima des Bodens erforderlichen Inhaltsstoffen nicht geeignet.

Voraussetzung für eine unter aeroben Bedingungen ablaufende Rotte zur Bildung von Humus sind die Einstellung eines für den mikrobiellen Abbau erforderlichen Wassergehalts des Schlamms, eine ausreichende Belüftung, d. h. Sauerstoffversorgung, der Rotte sowie die Voreinstellung eines für das optimale Wirken der aerob arbeitenden Mikroorganismen geeigneten C/N-Verhältnisses, das üblicherweise bei 15 bis 30 : 1 liegt.

Im europäischen Patent 0 302 179 wird ein Verfahren zum Humifizieren von Klärschlämmen unter Versetzen der teilentwässerten Rohschlämme mit einer oder mehreren organischen Substanzen aus der Gruppe Stroh, Holzabfälle und Altpapier offenbart, das dadurch gekennzeichnet ist, daß man das Stroh in lockerer Schüttung auf einer ebenen Freifläche ausbreitet, den auf einen Feststoffgehalt von mindestens 25 Gew.- % eingestellten Rohschlamm, dessen Schwermetallgehalt unter den gesetzlichen Höchstwerten liegt, in einer solchen Menge darauf ausbringt, daß das Mischungsverhältnis organische Substanz(en) : teilentwässerter Rohschlamm im Bereich von 0,1 bis 0,5 m³ : 1 m³ liegt, danach unmittelbar alle Komponenten miteinander mittels an sich bekannter Umsetzgeräte vermischt, und das so entstandene Gemisch auf einer Freifläche mit einer Größe von mindestens 4 m² pro m³ Klärschlamm der selbstständigen aeroben Verrottung bis zur Humifizierung des Materials überläßt.

Mit dem im europäischen Patent 0 302 179 angegebenen Verfahren war es erstmals möglich, im industriellen Maßstab nicht nur eine Kompostierung von Klärschlämmen zu bewirken, wie dies in allen in dem genannten Patent angeführten Druckschriften des Standes der Technik der Fall war, sondern eine vollständige Humifizierung unter Bildung eines als Bodenverbesserer geeigneten und alle essentiellen Wirkstoffe für das Pflanzenwachstum enthaltenden Humus. Dabei konnte die Aufgabe gelöst werden, die zum Humus führende aerobe Verrottung ohne aufwendige Reaktoren oder Verrottungstürme durchzuführen und trotzdem eine vollständig aerob verlaufende Humifizierung in vergleichsweise kurzer Zeit zu erreichen.

Die vorliegende Erfindung hat zur Aufgabe, ein Verfahren zum Humifizieren von strukturierten und unstrukturierten organischen Materialien bereitzustellen, das nicht die Nachteile des Standes der Technik aufweist, insbesondere also mit einfachen technischen Mitteln den Erhalt eines als Bodenverbesserer geeigneten Humus erlaubt. Insbesondere sollten auch in land- oder forstwirtschaftsfernen Gebieten verfügbare organische Materialien in den Recyclingprozeß einbezogen und damit verhindert werden, daß solche organischen Materialien durch Sonderdeponielagerung aufwendig entsorgt werden, statt sie einem natürlichen Recycling unter Neubildung von Biomasse bei der Humifizierung zuzuführen.

Überraschend wurde nun gefunden, daß die genannte Aufgabe im Rahmen eines Verfahrens zum Humifizieren von strukturierten und unstrukturierten organischen Materialien gelöst werden kann, bei dem man als organische Materialien zur Humifizierung pflanzliche Abfalle aus der Industrieproduktion und/oder Haushalt bzw. Garten- und Forstwirtschaft verwendet. Dabei ergab sich in für den Fachmann überraschender Weise, daß der Trockensubstanzgehalt der für die Humifizierung vorbereiteten Mischung bei ≧ 45 % der Gesamtmischung liegen kann und trotzdem eine schnelle und gezielt Humus bildende Umwandlung stattfinden kann, ohne daß dies zu unangenehmen oder schädlichen Emissionen führt.

Die Erfindung betrifft ein Verfahren zum Humifizieren von strukturierten und unstrukturierten organischen Materialien durch Bereitstellung eines derartigen Materials oder einer gut durchmischten Mischung mehrerer derartiger Materialien unter Einstellung
- eines Mahroporenraums von ≧ 300 ml Luft pro Liter organisches Ausgangsmaterial;
- eines Gehalts an Trockensubstanz von ≧ 45 %, bezogen auf das Gewicht des organischen Ausgangsmaterials;
- eines Gehalts an organischer Trockensubstanz ≧ 30 %, bezogen auf den Trockensubstanzgehalt;
- einer Saugkapazität von ≧ 150 ml pro Liter organischen organischen Ausgangsmaterials; und
- eines pH-Wertes im Bereich von 6,5 bis 8,0,
und selbständiges aerobes Verrottenlassen der Materials oder der Mischung bis zur vollständigen Humifizierung des Materials.

In einer bevorzugten Ausführungsform des erfindungsgemäßen Verfahrens wird die leitfähigkeit, die ein Maß für den Gehalt der Mischung an Salzen in der flüssigen Phase darstellt, auf einen Wert von ≦ 2500 µS eingestellt.

Unter "Humifizierung" wird hier wie in der folgenden Beschreibung und in den Patentansprüchen nicht allein die aerob-mikrobielle Umwandlung des strukturierten und unstrukturierten organischen Materials unter Mineralisierung zum Nährhumus (= Kompost) verstanden, die an einer ersten Absenkung der im Zuge der mikrobiellen Umwandlung auf 60 bis 70 °C erhöhten Temperatur erkannt werden kann. Vielmehr zählt im Sinne des erfindungsgemäßen Verfahrens zur Humifizierung auch die durch Pilze (Cellulose und Lignin aufschließende Boden- und/oder Strahlenpilze, Actinomyceten, auch Penicillium-Arten) bewirkte weitere Umwandlung von post-mortaler organischer Substanz unter Aufbau wertvoller Humusstoffe zum Dauerhumus. Die erste Phase der Humifizierung wird allgemein als "Erhitzungsphase" bezeichnet. Während dieser Phase erwärmt sich die Masse des zu einer Miete aufgeschichteten Rottegemisches infolge der intensiven Abbautätigkeit aerober, thermophiler Mikroorganismen (überwiegend Polysaprobier) auf 60 bis 70 °C. Diese Phase hält mehrere Tage, bis zu 4 Wochen, an und wird durch die sogenannte "Pilzphase" abgelöst. Diese ist gekennzeichnet durch die relativ schnelle Entwicklung der Cellulose und Lignin aufschließenden und abbauenden Pilze, die mit Ihren Mycelen das gesamte Rottematerial durchwuchern. Zudem kennzeichnet die beginnende Humusbildung die Besiedlung des Rottematerials mit Alpha- und Betamezosaprobiern. Der fertige Humus enthält nur noch in ganz untergeordnetem Maß Polysaprobier und Alphamezosaprobier, deren Lebensmöglichkeiten durch die aerobe Verfahrensführung mehr und mehr eingeschränkt wird; im reifen Humus sind nur noch Betamezosaprobier und Oligosaprobier vorhanden.

Unstrukturierte organische Materialien im Sinner der vorliegenden Erfindung können beispielsweise Klärschlämme sein. Als Klärschlämme kommen prinzipiell alle bei der Reinigung von industriellen und kommunalen Abwässern durch die unterschiedlichsten Verfahren erhaltenen Schlämme in Frage. Derartige Schlämme, beispielsweise Belebtschlämme aus den Kläranlagen, weisen eine sehr unterschiedliche Zusammensetzung auf, die im wesentlichen von den in die jeweilige Kläranlage eingeleiteten Abwässern und den Abbaubedingungen abhängig ist. Entsprechend dem erfindungsgemäßen Verfahren werden zwar gewisse Mengen an Schadstoffen, insbesondere Schwermetallionen, im entstandenen Humus biologisch gebunden und deshalb langsamer pflanzenverfügbar. Folglich ist es nicht zwingend erforderlich, gänzlich Schwermetallionen-freie Klärschlämme als Ausgangsprodukte einzusetzen. Es entspricht jedoch der Erfindung, in erster Linie solche Rohschlämme zu verwenden, deren Schwermetallgehalt unter den gesetzlichen Höchstwerten liegt, die im einzelnen festgelegt sind. Unter die gesetzlichen Bestimmungen fallen insbesondere solche Klärschlämme, die als solche auf landwirtschaftlich oder gärtnerisch genutzte Böden ausgebracht werden sollen. Besonders bevorzugt sind solche Klärschlämme, deren Gehalte an toxischen Schwermetallen, insbesondere Cadmium, Blei und/oder Quecksilber, im Bereich nur weniger ppm oder darunter liegt.

Die Klärschlämme werden für die besondere Ausführungsform des erfindungsgemäßen Verfahrens auf alle relevanten Nährstoffe und Wirkstoffe untersucht, wobei besonderer Wert auf die Schadstoffe gelegt wird, für die gesetzliche Höchstgrenzen festgelegt sind. Wo bereits gesetzliche vorgeschriebene Klärschlamm-Analysen vorliegen, werden diese insoweit ergänzt, als auch die Gehalt an verwertbaren Elementen analytisch festgestellt werden. Die genannten Analysen sind Teil der sogenannten "dynamischen Bilanz", die bevorzugterweise Teil des erfindungsgemäßen Verfahrens sein kann. Dabei handelt es sich zwar nicht um eine Bilanz im strengen Sinn des Wortes; es wird jedoch Wert darauf gelegt, mit Hilfe der analytischen Untersuchungen die Zusammensetzung der Rohstoffe für den Humifizierprozeß verfahrensgerecht einzustellen und damit nicht nur für einen kontrollierten Gang der Verrottung Sorge zu tragen, sondern auch zu garantieren, daß das Produkt den Anforderungen an Hygiene, Umweltverträglichkeit und biologische Erfordernisse als Boderverbesserer entspricht. Darüber hinaus können Defizite, die einer gezielten Humifizierung der Rohstoffe entgegenstehen, ausgeglichen und damit optimale Voraussetzungen für die mikrobielle Humifizierung geschaffen werden.

Die Klärschlämme aus kommunalen und Industrie-Kläranlagen weisen üblicherweise einen relativ hohen Stickstoffgehalt auf, der eine selbständige Humifizierung unter mikrobiellem Einfluß nur in einem sehr langwierigen Verfahren gestattet. Vorteilhafterweise ist - wie aus dem Stand der Technik bekannt - der Zusatz eines oder mehrerer organischer Zuschlagsstoffe erforderlich. Dadurch Kann ein C/N-Verhältnis eingestellt werden, das günstigerweise im Bereich von 15 bis 30 : 1 liegt. Genauso wie bei dem aus dem Europäischen Patent 0 302 179 beKannten Verfahren, jedoch im Unterschied zum Stand der Technik, spielt in dem erfindungsgemäßen Verfahren zum Humifizieren von strukturierten und unstrukturierten organischen Materialien das C/N-Verhältnis keine so ausschlaggebende Rolle. So ist es erfindungsgemäß möglich, das C/N-Verhältnis auch auf andere Werte einzustellen. Wird das C/N-Verhältnis auf einen Wert > 30 : 1 eingestellt, so verlangsamt sich lediglich der Humifizierungsprozeß. Wird das C/N-Verhältnis auf einen Wert < 15 : 1 eingestellt, gehen bestimmte Mengen an wiederverwertbarem Stickstoff für die Humifizierung verloren. Einstellungen des Verhältnisses außerhalb des Bereiches 15 bis 30 : 1 sind jedoch problemlos möglich, beeinträchtigen die Wirkungsweise und damit den Erfolg des Verfahrens nicht und unterscheiden dieses damit von den aus dem Stand der Technik bekannten Verfahren.
Als strukturierte bzw. unstrukturierte organische Substanz bzw. organische Substanzen werden erfindungsgemäß zum Beispiel pflanzliche Abfälle aus der Industrieproduktion und/oder Haushalt bzw. Garten- und Forstwirtschaft verwendet. Unter "pflanzlichen Abfällen aus der Industrieproduktion" werden organische Substanzen verstanden, die bei industriellen Verfahren als Produkt der Verwertung von Pflanzen und/oder Pflanzenteilen entstehen und sich im Wege eines Humifizierungsverfahrens abbauen bzw. in Humus umwandeln lassen. Solche Substanzen fallen in pflanzenverarbeitenden Industriebetrieben in großen Mengen an und müssen teilweise infolge der Tatsache, daß sie mit chemischen Stoffen wie beispielsweise Lösungsmitteln oder Extraktionsmitteln in Kontakt kommen, als Sondermüll entsorgt werden.

Beispiele für solche Substanzen sind bei der Herstellung von Pflanzenextrakten verwendete Pflanzen oder Pflanzenteile, die mehr oder weniger große Restmengen eines Extraktions- oder Lösungsmittels enthalten. In Frage kommen in einer bevorzugten Ausführungsform der Erfindung beispielsweise mit Ethanol extrahierte Pflanzen oder Pflanzenteile, die teilweise noch geringe Mengen an Ethanol enthalten. Solange das verwendete Extraktions- oder Lösungsmittel, im vorliegenden Fall Ethanol, nicht schädlich oder sogar toxisch für die humifzierenden Mikroben ist, stört für das erfindungsgemäße Verfahren der Restlösungsmittelgehalt nicht.

In einer anderen Ausführungsform können beispielsweise bei der Tabakherstellung nicht verwendbare Teile von Tabakpflanzen als strukturierte organische Substanz verwendet werden, die als pflanzlicher Abfall aus der Industrieproduktion anfällt.

Eine weitere organische Substanz, die als pflanzlicher Abfall aus der Industrie-produktion anfallt und sich hervorragend als strukturiertes organisches Material für die Verwendung des erfindungsgemäßen Verfahrens eignet, sind Trester (auch Treber genannt) verwendbar. Hierunter versteht man die mehr oder weniger große Flüssigkeitsrestmengen enthaltenden Preßrückstände, die nach Abpressen von Obstsaft aus zur Saftherstellung verwendeten Obstsorten, einschließlich Citrusfrüchten, von Traubensaft aus den zerquetschten Schalen, Kernen und Stielen von Trauben bzw. bei der Würzebereitung in der Bierherstellung aus Malzschrot erhalten werden. Derartige Trester werden üblicherweise als Futtermittel oder - im Falle von Trauben - auch zur Herstellung von Branntwein verwendet. In der Vergangenheit wurde auch versucht, Trester für die Anreicherung des Bodens mit organischen Nährstoffen zu verwenden. Diese Versuche waren jedoch insofern nicht erfolgreich, als die Böden versauerten und verschlammten. Die Folge war, daß eine Verbesserung der Bodenbeschaffenheit auf diesem Wege, d. h. über die unmittelbare Einbringung von Trester in den Boden, nicht erfolgen konnte.

In einer weiter bevorzugten Ausführungsform des Verfahrens werden als strukturierte organische Materialien Trester aus der Herstellung alkoholischer Getränke (Bier, Wein, Branntwein) verwendet, die Restmengen von Alkohol enthalten können. Dies ist für das erfindungsgemäße Verfahren nicht nachteilig, da die Mikrobentätigkeit durch Ethanol nicht beeinträchtigt wird.

In einer weiteren Ausführungsform des Verfahrens können als strukturierte organische Materialien pflanzliche Abfälle aus Haushalt bzw. Garten- und Forstwirtschaft verwendet werden. Erfindungsgemäß besonders gut geeignet sind beispielsweise Pflanzen oder Pflanzenteile, wie sie regelmäßig in jedem Garten anfallen und in großen Mengen nach wie vor dem Hausmüll zugeführt werden, statt sie zum Wiederaufbau organischen Materials in Form von Dauerhumus zu verwerten. In Frage kommen beispielsweise Gras bzw. Heu, Blüten, Stengel und Wurzeln bzw. Knollen von Blumen, holzige oder verholzende Teile von Pflanzen wie Sträuchern und Bäumen, Wurzeln und durchwurzeltes Erdreich sowie Früchte und Gemüse aller Art, beispielsweise in Form von Grün- oder Grasschnitt, Strauch- und Baumschnitt, Schreddergut, Friedhofsabfällen und halbfertigem Kompost.

Bei der landwirtschaftlichen Arbeit anfallende Materialien sind ebenfalls als strukturierte organische Materialien geeignet. Unter diese fallen beispielsweise Stallabfälle, Strohschütten, Getreidespreu, Spelzen, Heu und Silage.

Weitere erfindungsgemäß bestens geeignete strukturierte bzw. unstrukturierte organische Materialien zum Einsatz für das erfindungsgemäße Verfahren sind pflanzliche Abfälle von Schiachthöfen, beispielsweise die in großen Mengen anfallenden Panseninhalte geschlachteter Rinder. Diese können -je nach Verdauungsgrad - als strukturierte oder unstrukturierte organische Materialien verwendet werden. Durch die aerobe Verfahrensführung gemäß dem vorliegenden Verfahren kann die übliche Geruchsemission in kurzer Zeit beendet werden. Die aerobe Verfahrensführung garantiert die emissionsfreie Verrottung selbst dieses Problemmaterials.

Gleiches trifft auf die - erfindungsgemäß ebenfalls mögliche - Verwendung von Abfällen aus der Zuckerindustrie, Stärkeindustrie und aus Speisefett und Speiseöl aus pflanzlichen Rohstoffen gewinnenden Betriebe zu. Die aus derartigen Industriebetrieben anfallenden pflanzlichen Abfallstoffe lassen sich üblicherweise nur über eine Deponierung entsorgen, die mit verstärkter Geruchsemission verbunden ist. Durch das erfindungsgemäße Verfahren einer selbständigen aeroben Verrottung werden solche Abfallstoffe geruchsemissionsfrei vollständig humifizierbar.

Weitere, als Abfälle in der Lebensmittelindustrie anfallende strukturierte bzw. unstrukturierte organische Materialien, die erfindungsgemäß geeignet sind, sind in Unternehmen der Kartoffelveredelungsindustrie (Kartoffelchips) sowie bei der Konservenherstellung und Sauerkrautherstellung anfallende pflanzliche Abfälle. Die übliche Geruchsemission bei der Verwertung derartiger Abfälle kann durch das erfindungsgemäße Verfahren bei aerober Einstellung der selbständigen Verrottung bereits kurzfristig unterbunden werden. Es entsteht in überraschender kurzer Zeit aus solchen Materialien allein oder aus ihren Mischungen mit anderen strukturierten oder unstrukturierten organischen Materialien durch selbständige aerobe Verrottung ein stabiler Humus.

Die genannten strukturierten oder unstrukturierten organischen Substanzen können entweder allein oder auch in Mischung miteinander verwendet werden, wobei es das vorliegende Verfahren in vorteilhafter und aus dem Stand der Technik nicht ableitbarer Weise erlaubt, einen stabilen Dauerhumus auch dann herzustellen, wenn verschiedenste strukturierte und/oder unstrukturierte organische Substanzen miteinander verwendet werden.

Den genannten Substanzen können auch organische Substanzen aus dem Hausmüll, wie sie in zunehmendem Maße in sogenannten "Grünen Tonnen" gesammelt werden, zugesetzt werden. Hierunter fallen beispielsweise pflanzliche Abfälle (Salatreste, Zwiebelschalen, Kartoffelschalen, Blätter von Radieschen, Radi, Gelbrüben oder Kohl, Schalen von Erbsen oder Bohnen, Kaffeesatz etc.). Überraschenderweise treten bei dem erfindungsgemäßen Verfahren die häufig im Zusammenhang mit der Kompostierung des Inhalts solcher "Grüner Tonnen" auftretenden Probleme nicht auf. Vielmehr kann in vergleichsweise kurzer Zeit ein stabiler Dauerhumus durch selbstständiges aerobes Verrottenlassen der strukturierten und/oder unstrukturierten organischen Substanzen hergestellt werden, vorausgesetzt, die genannten organischen Substanzen sind schadstoffarm bzw. sogar schadstofffrei und ihre Mischung kann unter Einstellung der oben genannten und nachfolgend im einzelnen beschriebenen Parameter bereitgestellt und der selbständigen aeroben Verrottung bis zur vollständigen Humifizierung überlassen werden.

Die genannten Substanzen können auch mit herkömmlichen, für die Humifizierung schon verwendeten Materialien wie beispielsweise Stroh, Sägespänen, Holzschliff, Altpapierschnitzeln usw. verwendet werden. Derartige Mischungen ermöglichen trotz der Verschiedenheit der beteiligten Komponenten eine aerobe Führung des Verrottungsvorgangs.

Bei der praktischen Durchführung des erfindungsgemäßen Verfahrens wird das zur Verfügung stehende strukturierte oder unstrukturierte organische Material oder ein gut durchmischte Mischung mehrerer derartiger Materialien bevorzugt auf einer Freifläche bereitgestellt. Dies kann beispielsweise dadurch geschehen, daß man dann, wenn ein derartiges organisches Material, beispielsweise ein strukturiertes organisches Material, humifiziert werden soll, dieses auf einer Freifläche unter Einstellung der oben bereits genannten und nachfolgend diskutierten Parameter bereitstellt. Beispielsweise kann aus der Landwirtschaft oder dem Garten stammendes Schreddergut allein zu einer vorteilhafter Weise pyramidenförmigen Miete angehäuft werden. In gleicher Weise kann dies auch mit trockenem Grünschnitt von Wiesen oder auch mit trockenem Baumschnitt geschehen. Insbesondere ist dies dann vorteilhaft, wenn die genannten Materialien frisch geschnitten sind und von lebenden Pflanzen stammen. Die vorgegebenen Parameter müssen jedoch in jedem Fall eingestellt werden.

In einer anderen bevorzugten Ausführungsform des erfindungsgemäßen Verfahrens kann auch eine gut durchmischte Mischung mehrerer strukturierter bzw. unstrukturierter organischer Materialien unter Einstellung der oben bereits genannten und nachfolgend im Detail diskutierten Parameter bereitgestellt werden. So wird beispielsweise in einer besonders bevorzugten Ausführungsform als strukturiertes organisches Material Stroh und/oder Baumrinde verwendet. Dieses Material wird auf einer Freifläche ausgebracht. Besonders bevorzugt ist aufgrund seiner Eignung, die erfindungsgemäßen Parameter positiv zu beeinflussen, Stroh (beispielsweise in Form von Strohmatten), die von Weizen und/oder Gerste stammen.

Auf dieses strukturierte organische Material werden strukturierte und/oder unstrukturierte organische Materialien aufgebracht. Diese können in bevorzugten Ausführungsformen beispielsweise Klärschlamm, Abfälle aus den kommunalen sogenannten "Grünen Tonnen" oder "Biotonnen", Zuckerrübenabfälle, Preßrückstände aus der Pflanzenöl gewinnenden Industrie, Trester bzw. Treber, Gemüserückstände aus der Konservenindustrie, Kartoffelveredelungsindustrie oder Sauerkrautherstellung oder auch Panseninhalte von Schlachtrindern sein.

Besonders gute Ergebnisse werden erzielt, wenn man als strukturiertes organisches Material Stroh und/oder Baumrinde und als unstrukturiertes bzw. strukturiertes Material Abfalle aus den "Biotonnen" verwendet, die überwiegend pflanzliche Materialien (Salatreste, Zwiebelschalen, Kartoffelschalen, Blätter von Radieschen, Kartoffeln, Radi, Gelbrüben oder Kohl, Schalen von Hülsenfrüchten, Kaffeesatz etc.) enthalten.

Gemäß einer weiteren bevorzugten Ausführungsform des erfindungsgemäßen Verfahrens werden als strukturiertes organisches Material Stroh und/oder Baumrinde und als unstrukturiertes organisches Material Klärschlämme verwendet.

Bei der Durchführung des erfindungsgemäßen Verfahrens unter Verwendung von Klärschlämmen wird der Feststoffgehalt der aus der Kläranlage entnommenen Rohschlämme auf einen Wert von mindestens 25 Gew.-% eingestellt. Dies kann in aus dem Stand der Technik bekannter Weise dadurch geschehen, daß man den Schlamm beispielsweise mit Hilfe von Zentrifugen, Siebbandpressen oder Kammerfilterpressen entwässert. Insbesondere bei der Verwendung von Kammerfilterpressen zur Entwässerung wird ein Feststoffgehalt der Rohschlämme erreicht, der im Bereich von 25 bis 35 Gew.-% liegt. Derartige Rohschlämme fallen in Form krümeliger Brocken oder einer krümeligen Paste an, die nur noch intercelluläres Wasser enthält und nicht in der Lage ist, größere Mengen von Schlämmwasser an die Umgebung abzugeben.

Derartige Schlammbrocken bzw. Schlammpasten bringt man anschließend auf die pflanzlichen Abfalle bzw. die in lockerer Schüttung auf einer Freifläche ausgebreitete(n) organische(n) Substanz(en) auf. Dies erfolgt in einer Menge, die eine Einstellung des Feststoffgehalt der Mischung - je nach Wahl der verwendeten Komponenten - auf ≧ 45 % der Gesamtmischung, bevorzugt 45 bis 55 % der Gesamtmischung, erlaubt.

Erfindungsgemäß entscheidend für den Erfolg des Verfahrens ist, daß bei Bereitstellung des strukturierten bzw. unstrukturierten organischen Materials oder einer Mischung derartiger Materialien, die üblicherweise gut durchmischt sind, die nachfolgend in einzelnen diskutierten Parameter eingehalten werden.

So kommt es erfindungsgemäß darauf an, daß in dem bereitgestellten strukturierten bzw. unstrukturierten organischen Material oder einer gut durchmischten Mischung mehrerer derartiger Materialien ein Makroporenraum von ≧ 300 ml Luft pro Liter organisches Ausgangsmaterial bereitgestellt wird. Unter "Makroporenraum" wird im wesentlichen die Menge an Luft bezeichnet, die in Form von großen Poren ("Makroporen") im Gesamtvolumen des organischen Materials enthalten ist. Ein Makroporenraum von ≧ 300 ml Luft pro Liter organisches Ausgangsmaterial ist erfoderlich, um eine aerobe Rotteführung garantieren zu können. Bei einem Markoporenraum < 300 ml Luft pro Liter organisches Ausgangsmaterial bilden sich in kürzester Zeit Fäulnis- und Verwesungsprozesse, die nicht nur die selbständige Humifizierung des Materials verhindern, sondern auch - aufgrund der freiwerdenden Fäulnisgase - sehr schnell zu einer die Umwelt beeinträchtigenden Emission von Faulgasen führen. Diese läßt sich zuverlässig verhindern, wenn der Wert des Makroporenraums bei bzw. oberhalb von 300 ml Luft pro Liter organisches Ausgangsmaterial liegt. In besonders bevorzugter Weise wird ein Makroporenraumbereich von 300 bis 600 ml Luft pro Liter organisches Ausgangsmaterial bereitgestellt.

Ein weiterer Parameter, der für ein selbständiges aerober Verrottenlassen des Materials eingestellt werden muß, ist der Gehalt an Trockensubstanz. Erfindungsgemäß muß bei Bereitstellung des strukturierten bzw. unstrukturierten organischen Materials oder einer gut durchmischten Mischung mehrerer derartiger Materialien ein Gehalt an Trockensubstanz eingestellt werden der ≧ 45 % ist, bezogen auf das Gewicht des organischen Ausgangsmaterials. Liegt der Gehalt an Trockensubstanz unterhalb von 45 %, ist eine Bindung des sich im Laufe des Verfahrens durch die mikrobiologischen Vorgänge bildenden Wassers in biologisch-natürlicher Weise nicht möglich, und es bilden sich Sickerwässer. Derartige Sickerwasseremissionen sind jedoch unerwünscht. Wichtige für die Humusbildung erforderliche Substanzen werden hierdurch ausgewaschen und können folglich nicht zur Bildung eines stabilen Humus beitragen. In bevorzugter Weise wird bei dem erfindungsgemäßen Verfahren ein Gehalt an Trockensubstanz im Bereich von 45 bis 55 %, bezogen auf das Gewicht des organischen Ausgangsmaterials, eingestellt. Besonders bevorzugt liegt der Gehalt an Trockensubstanz bei 50 %.

Die organische Trockensubstanz ist der Anteil im strukturierten bzw. unstrukturierten organischen Ausgangsmaterial, der die Entwicklungsgrundlagen für die biologischen bzw. mikrobiellen Umwandlungen liefert. Von ihr ist es abhängig, ob und welche biologische Prozesse schnell oder langsam in Gang gesetzt werden bzw. selbständig unter aeroben Bedinungen ablaufen können. Die organische Trockensubstanz liefert das Material, auf dem sich die die Verrottung unterhaltenden Mikroorganismen entwickeln können. Erfindungsgemäß muß der Gehalt an organischer Trockensubstanz auf einen Wert ≧ 30 % eingestellt werden, bezogen auf den Trockensubstanzgehalt. Ein bevorzugter Wert stellt der Gehalt an organischer Trockensubstanz im Bereich von 30 bis 60 % dar.

Das erfindungsgemäß bereitgestellte strukturierte bzw. unstrukturierte organische Material muß für die Humifizierung eine bestimmte Saugkapazität bzw. ein Saugvermögen aufweisen. Dadurch ist das Material in der Lage, überschüssiges Wasser zu binden. Dadurch läßt sich die Wasserversorgung (Wasserzufuhr bzw. Freiwerden von Wasser infolge mikrobieller Vorgänge) in der selbständig humifizierenden Masse regulieren. Andererseits wird verhindert, daß sich Sickerwasser bildet, das das Grundwasser gefährdet, und für die Humifizierung erforderliches Material ausgewaschen wird. Erfindungsgemäß muß die Saugkapazität bei einem Wert von ≧ 150 ml Wasser pro Liter organischen Ausgangsmaterials liegen. Liegt die Saugkapazität unter diesem Wert, wird bei der mikrobiellen Umwandlung gebildetes Wasser nicht gebunden, sondern sickert aus dem humifizierenden Material heraus, wodurch Boden und Grundwasser belastet werden können, und wäscht wichtige Komponenten weg. Zudem sind derartige Sickerwasserbildungen für die Durchführung der Humifizierung aus Sicht des Gesetzgebers nicht zulässig und müssen daher verhindert werden. In einer bevorzugten Ausführungsform des erfindungsgemäßen Verfahrens liegt die Saugkapazität im Bereich von 150 bis 300 ml Wasser pro Liter organischen Ausgangsmaterials.

Der pH-Wert des strukturierten bzw. unstrukturierten organischen Materials oder einer gut durchmischten Mischung mehrerer derartiger Materialien muß - als Voraussetzung für eine optimale Humusbildung - im neutralen Bereich liegen. Dies ist deswegen zwingend, weil die humifizierenden Mikroben im wesentlichen nur im neutralen Bereich arbeiten. Unter "neutralem Bereich" wird erfindungsgemäß verstanden, daß der pH-Wert des Materials bzw. der gut durchmischten Mischung mehrerer Materialien im Bereich von 6,5 bis 8,0 liegen muß. Ein pH-Wert im stärker sauren Bereich (beispielsweise bei 6,0) oder im starker alkalischen Bereich (beispielsweise bei 8,5) führt zum Absterben der für die Humifizierung verantwortlichen Mikroben, und eine Humifizierung findet folglich nicht statt. Besonders bevorzugt liegt der pH-Wert im Bereich von 6,8 bis 7,5, ganz besonders bevorzugt bei 7,0 bis 7,2.

Für die selbständig aerob verlaufende vollständige Humifizierung der oben genannten strukturierten bzw. unstrukturierten organischen Materialien ist in einer bevorzugten Ausführungsform des erfindungsgemäßen Verfahrens auch die Einhaltung eines maximalen Salzgehaltes wünschenswert. Der Salzgehalt darf nicht zu hoch sein, wenn die mikrobielle Umsetzung nicht gestört werden soll bzw. sich nicht verlangsamen soll. Andererseits ist ein gewisser Salzgehalt nötig, da von den pflanzlichen Mikroorganismen zur Erzeugung des osmotischen Drucks eine Mindestsalzmenge gebraucht wird. Zudem liegen in den Ausgangsmaterialien vorhandene Nährstoffe in mineralischer Form, jedoch in Wasser gelöst, vor. Sie sind also selbst Salze und werden nur in Wasser gelöster Form von den die Humifizierung bewirkenden Mikroben aufgenommen bzw. verarbeitet. In bevorzugter Weise wird der Salzgehalt über die Leitfähigkeit des bereitgestellten strukturierten bzw. unstrukturierten organischen Materials bzw. der gut durchmischten Mischung mehrerer derartiger Materialien gemessen. Bevorzugterweise sollte die Leitfähigkeit bei einem Wert von ≦ 2500 µS liegen. In einer besonders bevorzugten Ausführungsform des erfindungsgemäßen Verfahrens wird der Salzgehalt so eingestellt, daß die Leitfähigkeit in einem Bereich von 500 bis 2000 µS liegt. Die Einstellung des Salzgehalts kann in an sich aus dem Stand der Technik bekannter Weise dadurch erfolgen, daß man Wasser und darin gelöste Salze aus dem bereitgestellten organischen Material abpreßt, was sich insbesondere dann als notwendig erweisen wird, wenn eine der bereitgestellten Komponenten unnatürlich hohe Salzgehalte in das Ausgangsmaterial einbringt. In vielen praktisch verwendeten organischen Materialien bzw. deren Mischungen wird ein natürlicher Salzgehalt vorliegen, der regelmäßig den vorstehend angegebenen Grenzwert nicht überschreitet.

In der praktischen Durchführung des Verfahrens wird entweder ein einzelnes strukturiertes bzw. unstrukturiertes organisches Material bereitgestellt, oder es wird eine gut durchmischte Mischung mehrerer derartiger Materialien bereitgestellt. Die Durchmischung erfolgt in vorteilhafter Weise dadurch, daß man an sich aus dem Stand der Technik bekannte Umsetzgeräte verwendet. Diese sorgen nicht nur für eine gleichmäßige Durchmischung der Materialien, sondern tragen auch dazu bei, daß die oben beschriebenen essentiellen Parameter eingehalten werden können. Bei der Durchmischung werden die Materialien nicht nur äußerst innig miteinander vermischt, sonder es wird auch eine für die Humifizierung in der Praxis bevorzugte Aufschichtung der Materialien in Form einer lockeren, stark mit Luft durchsetzten Miete, besonders bevorzugt in Pyramidenform, erreicht. Die Form der Pyramidenmiete ermöglicht den größtmöglichen Luftzutritt.

Erfindungsgemäß kann diese Miete der selbständigen aeroben Verrottung des organischen Materials bis zur vollständigen Humifizierung überlassen werden. In einer bevorzugten Ausführungsform wird jedoch die Miete mehrfach umgesetzt. In der Praxis ist im Verlauf bis zur vollständigen Humifizierung eine zwei- bis dreimalige Umsetzung ausreichend. Die Umsetzung geschieht in vorteilhafter Weise dadurch, daß man für die Durchmischung an sich aus dem Stand der Technik bekannte Umsetzgeräte verwendet. Diese Geräte werden beispielsweise bei der Umsetzung von sonst für den Rottevorgang üblichen Rottemieten eingesetzt. Beispielsweise fräsen sie mit Hilfe einer Frästrommel eine dünne Schicht des Mietematerials von der Miete ab und werfen dieses "über Kopf" durch an dem Umsetzgerät angebrachte Leitflächen ab und formen das vermischte Material danach zu einer neuen Miete. Die Schneckengänge in der Frästrommel sorgen dabei für eine intensive Durchmischung. Derartige Geräte mischen auch das gemäß dem vorliegenden Verfahren in Schichtform ausgebreitete Material und hinterlassen eine ca. 1 bis 4 m, bevorzugt 2,5 m, breite und bis 2 m hohe, sich nach oben verjüngende Miete, vorzugsweise eine in Form einer Pyramide aufgeschichteten Miete, da diese die größtmögliche Zutrittsfläche für Luft bzw. Sauerstoff aufweist, der für einen aeroben Rottevorgang essentiell ist. In der Miete sind die strukturierten und/oder unstrukturierten organischen Substanzen zu einem einheitlich durchmischten Material aufgeschichtet.

Nach intensiver Durchmischung und Umsetzung liegt ein Material vor, dessen Strukturierung eine selbständige aerobe Verrottung dadurch garantiert, daß in der gesamten Schicht des Gemisches durch ausreichende Mahroporenräume ein permanenter Sauerstoffzutritt möglich ist und dadurch gewährleistet wird, daß die humifizierende Mikroben immer im aeroben Milieu arbeiten. Die richtige Wahr der erfindungsgemäß verwendbaren strukturierten und unstrukturierten organischen Materialien, einschließlich deren Mengenverhältnissen, sorgt zudem für die Einstellung der essentiellen Parameter.

Wenn für herkömmliche Kompostierverfahren, die bekanntermaßen nicht zu einem stabilen Dauerhumus führen, pflanzliche Abfalle verwendet wurden, gab es immer wieder Probleme dadurch, daß zwar der Außenbereich der Kompostiermasse ausreichend mit Luft versorgt wurde, jedoch immer die Gefahr bestand, daß die Innenräume der Kompostmasse mangels Luftzutritt "umkippte", also anaerob unter Bildung übelriechender Fäulnisgase abgebaut wurden. Dies ließ sich nur dadurch verhindern, daß man aufwendige mechanische oder sagar technisierte Vorrichtungen vorsah, die die gesamte Masse mit ausreichender Luft für eine aerobe Kompostierung versorgten. Größere Mengen derartiger organischer Substanzen konnten ohne weiteres nicht kompostiert, geschweige denn humifiziert werden.

Ein "Umkippen" der mit dem erfindungsgemäßen Verfahren verarbeiteten Massen läßt sich ohne weiteres dadurch verhindern, daß die Komponenten - strukturierte und unstrukturierte organische Substanzen - unter Beachtung der oben angegebenen Parameter sorgfältig unter Bildung ausreichender Makroporenräume vermischt und die dadurch erhaltenen Massen zu einer Rotte aufgeschichtet bzw. umgesetzt werden, daß sie in Form einer sich nach oben verjüngenden Miete in Pyramidenform vorliegen. Dadurch werden die Gemischschichten nie so dick, daß mangels ausreichendem Luftzutritt anaerobe Bereiche entstehen können. Hierzu tragen auch die strukturierten organischen Materialien bei, mit deren Hilfe ein mehr oder weniger strukturiertes Gemisch erhalten wird, das ausreichend stabile Makroporenräume umfaßt.

Erfindungsgemäß ist es aufgrund der lockeren Struktur des Gemisches aus strukturierten und/oder unstrukturierten organischen Substanzen wie pflanzlichen Abfällen aus der Industrieproduktion und/oder Haushalt bzw. Garten- und Forstwirtschaft und einer guten Vermischung der Komponenten zu Beginn des Rottevorgangs nicht erforderlich, die einmal gebildete Masse häufig umzusetzen, wie dies im Stand der Technik sehr häufig der Fall war. Während der gesamten Verrottungszeit bis zur Bildung des stabilen Dauerhumus, die im Regelfall nach durchschnittlich drei bis fünf Monaten abgeschlossen ist (in der warmen Jahreszeit etwas kürzer, in der kalten Jahreszeit etwas länger), ist eine gute Sauerstoffversorgung der gesamten Masse gewährleistet. Dies tritt sogar im Hinblick auf die Tatsache zu, daß die Masse im Verlauf des Verrottungsprozesses zusammensinkt. Es bleiben jedoch im Rahmen des erfindungsgemäßen Verfahrens ausreichend großen Makroporenräume, um eine aerobe Verrottung des Materials über die gesamte Zeit zu garantieren.

Um den Verrottungsprozeß zu beschleunigen, kann es jedoch vorteilhaft sein und ist damit auch bevorzugt, das Gemisch mit den oben beschriebenen Umsetzgeräten einmal oder auch mehrmals, beispielsweise zweimal oder dreimal, umzusetzen. Dadurch wird in vorteilhafter Weise das Gemisch noch besser homogenisiert, die Porenstruktur weiter verbessert und eine noch bessere, d. h. schnellere Humifizierung des Materials erreicht.

Entsprechend der oben genannten bevorzugten Ausführungsform des Verfahrens wird im Rahmen der "dynamischen Bilanz" auch der fertige Humus analysiert und dadurch kontrolliert, welche in den Ausgangsschlämmen und den organischen Substanzen vorhandenen Stoffe sich durch den mikrobiellen Abbau in Humus umgesetzt haben. Gleichzeitig wird für das Verkaufsprodukt Humus die Analyse der Zusammensetzung ermittelt, die für den späteren Verwender Anhaltspunkt für den Einsatz bzw. für das gegebenenfalls gewünschte Zumischen weiterer Komponenten zur Bodenverbesserung sein kann. Gegebenenfalls ist es auch möglich, im späteren Verlauf der Humusverwertung noch Analysen der auf dem verbesserten Boden gewachsenen Pflanzen und der damit produzierten Früchte mit in die "dynamische Bilanz" einzubeziehen und dadurch (bis auf die gasförmigen Stoffwechselprodukte) eine vollständige Bilanz der Verwertung der als Schlamm bzw. organische Substanz(en) eingebrachten Ausgangsstoffe und der mit ihrer Hilfe hergestellten Produkte zu erstellen.

Gegenüber aus dem Stand der Technik bekannten Verfahren weist das erfindungsgemäße Verfahren folgende Vorteile auf: Durch inniges Vermischen und lockeres Aufschütten der einen oder mehrerer strukturierter und/oder unstrukturierter organischer Substanzen, die preiswert verfügbar sind, werden die bisher meist nur deponierten organischen Abfallprodukte einer aeroben Zersetzung und später einer Humifizierung zugeführt und wieder vollständig in den natürlichen Kreislauf eingeschleust. Das erfindungsgemäße Verfahren kommt dabei ohne komplizierte Verrottungstürme oder Bioreaktoren aus, deren Erstellung nicht nur kostenintensiv ist, sondern auch häufig das Landschaftsbild stört. Die mit dem erfindungsgemäßen Verfahren garantierte selbständige aerobe Verrottung der Mischung erfolgt auch ohne Geruchsbelästigung und ohne die Gefahr eines "Umkippens" in die anaerobe Verfaulung unter Emission meist giftiger, jedenfallsjedoch unangenehmer Faulgase.

In dem patentgemäßen Verfahren werden zudem eine Vielzahl organischer Substanzen, die - teilweise aufgrund eines geringen Chemikalien-Restanteils - auch dann als Deponieprodukte angesehen werden müssen, wenn die Chemikalienreste nicht toxisch sind, in den natürlichen Kreislauf zurückgeschleust. Sie werden nicht nur im Rahmen einer Kompostierung abgebaut und damit zum Verschwinden gebracht, sondern dienen auch als Ausgangsstoffe für den erneuten Aufbau von Biomasse, ohne daß dies in komplizierter Weise gesteuert werden müßte. Vielmehr kann das strukturierte und unstrukturierte Material durch selbständiges aerobes Verrotten in ein wertvolles Produkt - Dauerhumus - umgewandelt werden.

Die bei dem natürlichen Verrottungsprozeß entstehende Wärme (maximal 60 bis 70 °C) tötet Ungeziefer und pathogene Erreger, insbesondere Wurmeier, Salmonellen, Colibakterien und Enterobacteriaceen im organischen Material (soweit vorhanden, z. B. im Klärschlamm) ab und hygienisiert dadurch das Material so, daß das Produkt den gesetzlichen Vorschriften entspricht.

Schadstoffe, wie zum Beispiel Schwermetallionen, werden - soweit vorhanden - biologisch durch organische Bindung in die mikrobe Substanz im entstehenden Humus gebunden und sind deshalb langsamer pflanzenverfügbar.

Das entstehende Material ist geruchlos, fallt in krümelig-erdähnlicher Konsistenz an und kann als Humus für den Landschafts- und Gartenbau als wertvoller Dünger in der Landwirtschaft verwendet und damit einer biologischen Verwertung zugeführt werden. Der entstandene Humus eignet sich vorzüglich als Bodenregenerator, Wasserspeicher, Filtermaterial und Versorgungsmedium des Bodens mit allen für das Pflanzenwachstum wichtigen Nährstoffen. Das Verfahren gemäß der vorliegenden Erfindung eignet sich dadurch besonders gut zur Praktizierung in der Land- und Forstwirtschaft. Sowohl die als Rohprodukt eingesetzten Klärschlämme als auch die als organische Substanz(en) eingesetzten pflanzlichen Abfalle aus der Industrieproduktion und/oder Haushalt bzw. Garten werden in den natürlichen Kreislauf zurückgeführt und müssen nicht aufwendig entsorgt bzw. deponiert werden.

Die Erfindung wird durch die nachfolgenden Anwendungsbeispiele näher erläutert.

### Beispiel 1

Von gesunden, lebenden Bäumen anfallender Baumschnitt wurde in einem handelsüblichen Schredder weitestgehend zerkleinert. Alle bei dem Schreddervorgang anfallenden Fraktionen wurden sorgfältig miteinander vermischt.

Der Makroporenraum des locker aufgeschichteten Materials betrug 480 ml Luft pro Liter Schreddermaterial. Der Gehalt an Trockensubstanz betrug 49 %, bezogen auf das Gewicht des organischen Ausgangsmaterials. Der Gehalt an organischer Trockensubstanz lag bei ≧ 58 %. Das Material hatte eine Saugkapazität von 150 ml pro Liter des Schreddermaterials. Der pH-Wert lag bei 7,1.

Das Material wurde in der gut durchmischten Form der selbständigen aeroben Verrottung überlassen. Nach 9 Monaten war das Material nahezu einheitlich humifiziert.

### Vergleichsbeispiel 1

Dasselbe Material wie in Beispiel 1 wurde mit einer Presse komprimiert, so daß der Makroporenraum deutlich unter 300 ml Luft pro Liter organischem Material lag. Ansonsten wurde das Schreddermaterial in der gleichen Weise behandelt wie in Beispiel 1 beschrieben. Nach 6 Tagen ging das Material partiell in anaerobe Fäulnis über. Es fing an, unangenehm stockig zu riechen. Zudem wurden mit zunehmender Zeit Faulgase freigesetzt. Nach erneutem Durchmischen und Lockern unter Anheben des Makroporenraums auf einen Wert von etwa 420 ml Luft pro Liter organischen Materials konnte der noch nicht verfaulte Teil der selbständigen aeroben Verrottung überlassen werden. Nach 10 Monaten wurde Humus erhalten.

### Vergleichsbeispiel 2

Dasselbe Material wie in Beispiel 1 mit anfänglich demselben Makroporenraum wurde im Verlaufe der Verrottung mehrfach durch Aufgabe von Wasser völlig durchgefeuchtet. Das Material sank zunehmend in sich zusammen. Der Makroporenraum nahm auf deutlich unter 300 ml Luft pro Liter organischen Ausgangsmaterials ab. Das Material fing bei wiederholter Befeuchtung an zu faulen. Fäulnisgase und unangenehme Geruchstoffe wurden emittiert.

### Vergleichsbeispiel 3

Der pH-Wert des Materials wurde durch Zugabe geringer Mengen von Kalk auf etwa 11,2 angehoben. Das Material wurde in der in Beispiel 1 beschriebenen Weise aufgeschichtet und der selbständigen Verrottung überlassen. Eine Verrottung in Richtung auf eine Humifizierung des Materials konnte jedoch nicht beobachtet werden. Vielmehr kam ein mikrobieller Abbau nach Abtötung der Mikroben durch unnatürlich hohen pH-Wert nicht zustande.

### Beispiel 2

Weizenstrohmatten, wie sie nach dem Mähdreschvorgang regelmäßig anfallen, wurden auf einer Freifläche ausgebreitet. Auf die Strohmatten wurden Haushaltsabfälle aus der Biotonne (bzw. Grünen Tonne) aufgebracht, nachdem diese geringfügig entwässert worden waren. Das Mischungsverhältnis Stroh (strukturiertes organisches Material) : Biotonnenabfälle (strukturiertes und unstrukturiertes organisches Material) betrug etwa 1 : 3.

Die Materialien wurden mit einem üblichen Umsetzgerät sorgfältig vermischt. Das so erhaltene Gemisch hatte einen Makroporenraum von 320 ml Luft pro Liter Mischung organischer Materialien, einen Trockensubstanzgehalt von 49 %, einen Gehalt an organischer Trockensubstanz von 60 %, eine Saugkapazität von 200 ml Wasser pro Liter organischen Ausgangsmaterials und einen pH-Wert von 7,0. Die Leitfähigkeit betrug 800 µS.

Das Material wurde zu einer 1,5 m hohen, 2,0 m breiten und 4,0 m langen, in Form einer Pyramide aufgeschichteten Miete aufgeworfen.

Das Material wurde nach 4 und 7 Wochen unter erneuter sorgfältiger Durchmischung umgesetzt. Nach 6 Monaten war eine vollständige Humifizierung des Materials erreicht: Es war ein stabiler Humus entstanden.

### Vergleichsbeispiel 4

Material derselben Zusammensetzung wie in Beispiel 2 wurde gut durchmischt. Es wurde jedoch eine Biotonnen-Mischung verwendet, ohne entwässert worden zu sein. Der Trockensubstanzgehalt der Mischung lag bei 26 %, bezogen auf das Gewicht des organischen Ausgangsmaterials. Der Makroporenraum der Mischung war 230 ml Luft pro Liter organischen Ausgangsmaterials.

Das Material wurde nach Durchmischung der selbständigen Verrottung überlassen. Nach relativ kurzer Zeit bildete sich innerhalb der Miete Schimmel, und Geruchsemissionen sowie das Entweichen von Faulgasen ließen eine anaerobe Verrottung erkennen. Es bildete sich Sickerwasser. Aufgrund zu niedrigen Trockensubstanzgehalts und folglich zu niedrigen Makroporenraums konnte eine aerobe Humifizierung nicht erfolgen.

### Vergleichsbeispiel 5

Es wurde dasselbe Material wie in Beispiel 2 verwendet. Durch Zumischung anorganischer Komponenten (Sand, Ton) wurde ein Gehalt an organischer Trockensubstanz von etwa 25 % eingestellt. Bei dem erhaltenen Material lag zudem der Makroporenraum deutlich unter 300 ml Luft pro Liter durchmischter Ausgangssubstanz.

Bei diesem Material kam eine mikrobiell veranlaßte Humifizierung nicht zustande. Das Material lag völlig tot und konnte auch durch erneutes Umsetzen nicht zur Verrottung gebracht werden.

## Patentansprüche

1. Verfahren zum Humifizieren von strukturiertem und/oder unstrukturierten organischen Materialien durch Bereitstellung eines derartigen Materials oder einer gut durchmischten Mischung mehrerer derartiger Materialien unter Einstellung
- eines Makroporenraums von ≧ 300 ml Luft pro Liter organisches Ausgangsmaterial;
- eines Gehalts an Trockensubstanz von ≧ 45 %, bezogen auf das Gewicht des organischen Ausgangsmaterials;
- eines Gehalts an organischer Trockensubstanz ≧ 30 %, bezogen auf den Trockensubstanzgehalt;
- einer Saugkapazität von ≧ 150 ml pro Liter organischen Ausgangsmaterials; und
- eines pH-Wertes im Bereich von 6,5 bis 8,0,
und selbständiges aerobes Verrottenlassen der Materials oder der Mischung bis zu vollständigen Humifizierung des Materials.

2. Verfahren nach Anspruch 1, worin die Leitfähigkeit bei einem Wert ≦ 2500 µS liegt.

3. Verfahren nach Anspruch 1 oder Anspruch 2, worin der Makroporenraum auf einen Wert im Bereich von 300 bis 600 ml Luft/Liter organischen Ausgangsmaterials eingestellt wird.

4. Verfahren nach einem oder mehreren der Ansprüche 1 bis 3, worin der Gehalt an Trockensubstanz auf einen Bereich von 45 bis 55 %, bevorzugt von 50 %, eingestellt wird.

5. Verfahren nach einem oder mehreren der Ansprüche 1 bis 4, worin der Gehalt an organischer Trockensubstanz auf einen Wert im Bereich von 30 bis 60 %, bezogen auf den Trockensubstanzgehalt, eingestellt wird.

6. Verfahren nach einem der Ansprüche 1 bis 5, worin die Saugkapazität des organischen Materials auf einen Wert im Bereich von 150 bis 200 ml Wasser/Liter organischen Ausgangsmaterials eingestellt wird.

7. Verfahren nach einem oder mehreren der Ansprüche 1 bis 6, worin der pH-Wert auf einen Wert im Bereich von 6,8 bis 7,5 eingestellt wird.

8. Verfahren nach einem oder mehreren der Ansprüche 1 bis 7, worin die Leitfähigkeit auf einen Wert im Bereich von 500 bis 2000 µS eingestellt wird.

9. Verfahren nach einem oder mehreren der Ansprüche 1 bis 8, worin das zu einer Rotte aufgeschichtete Gemisch im Verlauf des Verrottungsprozesses ein- oder mehrmals umgesetzt wird.

10. Verwendung des nach dem Verfahren gemäß Ansprüchen 1 bis 9 hergestellten Humus als Bodenregenerator, Wasserspeicher, Filtermaterial und Versorgungsmedium des land- oder forstwirtschaftlich genutzten Bodens mit allen für das Pflanzenwachstum wichtigen Nährstoffen.
